# EUROPEAN PATENT APPLICATION

(11) **EP 4 576 352 A1**
(43) Date of publication of application: **25.06.2025**
(21) Application number: 24188883.3
(22) Date of filing: 16.07.2024
(51) Int. Cl.: H01M 50/172, H01M 50/183, H01M 50/103, H01M 50/15, H01M 50/176, H01M 50/184, H01M 50/528, H01M 50/533, H01M 50/548, H01M 50/553, H01M 50/562, H01M 50/564

(54) **RECHARGEABLE BATTERY**

(30) Priority: 21.12.2023 KR 20230188484
(71) Applicant: SAMSUNG SDI CO., LTD., Giheung-gu Yongin-si, Gyeonggi-do 17084 (KR)
(72) Inventor: Kim, Jihwan, 17084 Yongin-Si, Gyeonggi-do (KR); Yong, Jun-Sun, 17084 Yongin-Si, Gyeonggi-do (KR); Bae, Kwangsoo, 17084 Yongin-Si, Gyeonggi-do (KR); Lee, Junhyung, 17084 Yongin-Si, Gyeonggi-do (KR); Bae, Chaeeun, 17084 Yongin-Si, Gyeonggi-do (KR); Roh, Heyoungcheoul, 17084 Yongin-Si, Gyeonggi-do (KR); Lee, Jungwoo, 17084 Yongin-Si, Gyeonggi-do (KR)
(74) Representative: Gulde & Partner

(57) **Abstract**

A rechargeable battery includes an electrode assembly (100), a case (200) configured to accommodate the electrode assembly (200), a subplate (320, 420) include a first planar portion (320_PL, 420_PL) connected to the electrode assembly (100) and a protruding portion (320_PR, 420_PR) protruding on the first planar portion (320_PL, 420_PL), a cap plate (360, 460) coupled to an open first side (210) of the case (200), and a terminal plate (380, 480) disposed on the cap plate (360, 460) and electrically connected to the subplate (320, 420), wherein the terminal plate (380, 480) comprises a first portion (380_P1, 480_P1) comprising a bottom surface and a second portion (380_P2, 480_P2) including a second planar portion connected to the first portion (380_P1, 480_P1), and the first portion of the terminal plate (380, 480) is in contact with the protruding portion (320_PR, 420_PR) of the subplate (320, 420).

## Description

### BACKGROUND

### 1. Field

Aspects of embodiments of the present disclosure relate to a rechargeable battery.

### 2. Description of the Related Art

A secondary battery refers to a rechargeable battery that may be charged and discharged multiple times. Such rechargeable batteries may be mainly used in various applications, such as electronics (e.g., smartphones, laptops, and tablets), electric vehicles, solar power generation, and emergency power supplies. In particular, lithium (Li)-ion batteries have high energy density and high charge and discharge efficiency, and thus, are used in various electronic products and electric vehicles.

Rechargeable batteries may be categorized as cylindrical rechargeable batteries, prismatic rechargeable batteries, and pouch rechargeable batteries, depending on the shape of the case thereof. A prismatic rechargeable battery has a structure in which an electrode assembly is embedded in a cylindrical metal can. The electrode assembly is inserted into the prismatic metal can, and the can is sealed by welding a cap plate thereto. In this case, manufacturing costs and the process difficulty may increase depending on the structure of the integrated body connected to the electrode assembly.

The above information disclosed in this background section is for enhancement of understanding of the background of the present disclosure, and therefore, it may contain information that does not constitute prior art.

### SUMMARY

One or more embodiments of the present disclosure may be directed to a rechargeable battery having reduced manufacturing costs and/or improved reliability.

The above and other aspects and features of the present disclosure will be described in, or will be more apparent from, the following description of some embodiments of the present disclosure.

According to one or more embodiments of the present disclosure, a rechargeable battery according to some embodiments includes an electrode assembly, a case configured to accommodate the electrode assembly, a subplate include a first planar portion connected to the electrode assembly and a protruding portion protruding on the first planar portion, a cap plate coupled to an open first side of the case, and a terminal plate disposed on the cap plate and electrically connected to the subplate, wherein the terminal plate comprises a recessed first portion comprising a bottom surface and a second portion including a second planar portion connected to the first portion, and the first portion of the terminal plate is in contact with the protruding portion of the subplate.

According to some embodiments of the present disclosure, a thickness of the first portion may be greater than a thickness of the protruding portion.

According to some embodiments of the present disclosure, the first planar portion and the protruding portion of the subplate may have a same thickness.

According to some embodiments of the present disclosure, the first portion in contact with the protruding portion may protrude from a bottom surface of the second portion toward the protruding portion.

According to some embodiments of the present disclosure, the rechargeable battery may further comprise a sealing member coupled onto the cap plate, wherein the sealing member is disposed between the second portion of the terminal plate and the subplate.

According to some embodiments of the present disclosure, the sealing member comprises a through-hole, the first portion of the terminal plate may be disposed in the through-hole.

According to some embodiments of the present disclosure, the first portion of the terminal plate and the protruding portion of the subplate are in contact with each other in the through-hole of the sealing member.

According to some embodiments of the present disclosure, the protruding portion of the subplate may have a cylindrical shape, and an interior of the protruding portion is hollow.

According to some embodiments of the present disclosure, an upper surface of the first portion of the terminal plate is may lower than an upper surface of the second portion of the terminal plate.

According to some embodiments of the present disclosure, the first portion of the terminal plate may expose a portion of the protruding portion.

According to some embodiments of the present disclosure, the subplate may comprise a forged product.

According to some embodiments of the present disclosure, the terminal plate further comprises a welding area provided on an upper surface of the first portion.

According to some embodiments of the present disclosure, the case may comprise, a first long sidewall portion and a second long sidewall portion facing and spaced apart from each other, and a first short sidewall portion and a second short sidewall portion facing and spaced apart from each other, areas of the first short sidewall portion and the second short sidewall portion being smaller than areas of the first long sidewall portion and the second long sidewall portion, respectively.

According to one or more embodiments of the present disclosure, a rechargeable battery according to some embodiments includes an electrode assembly, a case configured to accommodate the electrode assembly, a subplate configured to include a first planar portion connected to the electrode assembly and a first protruding portion protruding on the first planar portion, a cap plate coupled to an open first side of the case, and a terminal plate disposed on the cap plate and electrically connected to the subplate, wherein the terminal plate comprises a first portion comprising a second protruding portion protruding toward the first protruding portion and a second portion comprising a second planar portion in contact with the first portion, and the first portion of the terminal plate is in contact with the first protruding portion of the subplate.

According to some embodiments of the present disclosure, the first planar portion and the first protruding portion of the subplate may have a same thickness.

According to some embodiments of the present disclosure, the first portion and the second portion may be formed of different materials.

According to some embodiments of the present disclosure, the first portion may comprise copper, and the second portion may comprise aluminum.

According to some embodiments of the present disclosure, the first portion may comprise a third planar portion, and the third planar portion may be in contact with the second portion.

According to some embodiments of the present disclosure, the second portion may comprise a hole through which the first portion is exposed.

According to one or more embodiments of the present disclosure, a rechargeable battery according to some embodiments includes an electrode assembly, a case configured to accommodate the electrode assembly, and to include an open first side and an open second side facing each other, a first subplate configured to include a first planar portion connected to the first side of the electrode assembly and a first protruding portion protruding on the first planar portion, a first cap plate coupled to the open first side of the case, and a first terminal plate disposed on the first cap plate and electrically connected to the first subplate, a second subplate configured to include a second planar portion connected to a second side of the electrode assembly and a second protruding portion protruding on the second planar portion, a second cap plate coupled to the open second side of the case; and a second terminal plate disposed on the second cap plate and electrically connected to the second subplate, wherein the first terminal plate comprises a recessed first portion comprising a bottom surface and a second portion comprising a third planar portion connected to the first portion, the first portion of the first terminal plate is in contact with the first protruding portion of the first subplate, the second terminal plate comprises a third portion comprising a third protruding portion protruding toward the second protruding portion and a fourth portion comprising a fourth planar portion in contact with the first portion, and the third portion of the second terminal plate is in contact with the second protruding portion of the second subplate.

According to one or more embodiments of the present disclosure, each of the first subplate and the second subplate may be implemented as a forged product to reduce the difficulty of a manufacturing process and defects in a rechargeable battery, thereby improving the reliability of the rechargeable battery.

According to one or more embodiments of the present disclosure, each of the first subplate and the second subplate may be implemented as a forged product to reduce manufacturing costs of the rechargeable battery.

According to one or more embodiments of the present disclosure, whether or not the terminal plate and the subplate are tightly fitted may be determined using a hole in the terminal plate. Accordingly, defects in the process of manufacturing a rechargeable battery may be reduced, and the reliability of the rechargeable battery may be improved.

In embodiments of the present disclosure, the current collector may be removed to reduce material costs.

However, the aspects and features of the present disclosure are not limited to those described above, and the above and other aspects and features will be more clearly understood to those having ordinary skill in the art from the detailed description with reference to the drawings, and in part, may be apparent therefrom, or may be learned by practicing one or more of the presented embodiments of the present disclosure.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates a perspective view showing a rechargeable battery according to some embodiments of the present disclosure;
FIG. 2 illustrates a cross-sectional view showing a rechargeable battery according to some embodiments of the present disclosure;
FIG. 3 illustrates a perspective view illustrating a case according to some embodiments of the present disclosure;
FIG. 4 illustrates an enlarged view of the region R1 in FIG. 2;
FIG. 5 illustrates a first cap assembly and a first subplate assembly according to some embodiments of the present disclosure;
FIG. 6 illustrates a first welding area formed on a first terminal plate according to some embodiments of the present disclosure;
FIG. 7 illustrates an enlarged view of the region R2 in FIG. 2;
FIG. 8 illustrates a view showing a second cap assembly and a second subplate assembly according to some embodiments of the present disclosure;
FIG. 9 illustrates a second welding area formed on a second terminal plate according to some embodiments of the present disclosure;
FIGS. 10 and 11 illustrate a rechargeable battery according to some embodiments of the present disclosure;
FIG. 12 illustrates a rechargeable battery according to some embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

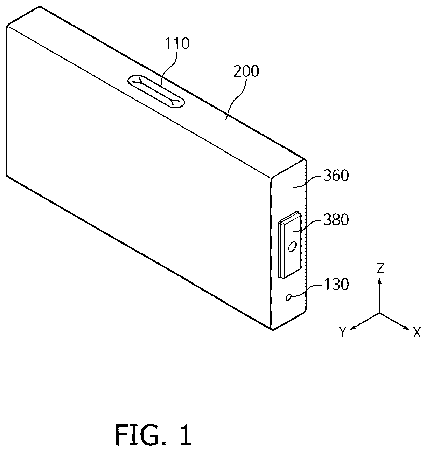

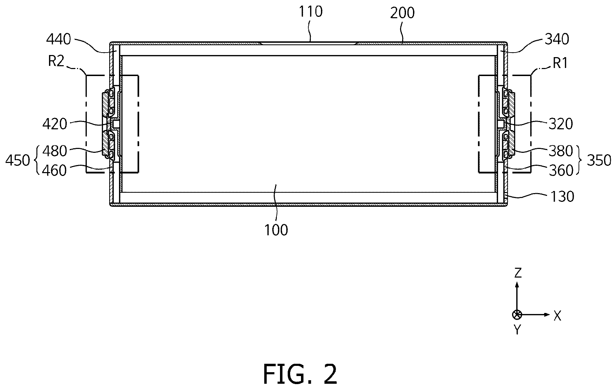

FIG. 1 illustrates a perspective view showing a rechargeable battery according to some embodiments of the present disclosure. FIG. 2 illustrates a cross-sectional view showing a rechargeable battery according to some embodiments of the present disclosure.

Referring to FIGS. 1 and 2, the rechargeable battery includes an electrode assembly 100 and a case 200. The rechargeable battery may contain a first subplate 320, a second subplate 420, a first cap assembly 350, and a second cap assembly 450.

The electrode assembly 100 is contained in the case 200. The electrode assembly 100 may be formed by winding or stacking a laminate of a first electrode plate, a separator, and a second electrode plate, each formed as a thin plate or film. In a case where the electrode assembly 100 is a wound laminate, the axis of the winding thereof may be parallel to or substantially parallel to the longitudinal direction of the case 200. In addition, the electrode assembly 100 may be a stack type instead of being a wound type, but the present disclosure is not limited thereto. In addition, the electrode assembly 100 may be a Z stack electrode assembly in which a positive electrode plate and a negative electrode plate are provided on opposite sides of a separator bent as a Z stack. In addition, one or more electrode assemblies 100 may be stacked, so that the long sides thereof are adjacent to each other, and received in the case 200. The present disclosure is not limited to any particular number of electrode assemblies 100. In the electrode assembly 100, the first electrode plate may act as a positive electrode, and the second electrode plate may act as a negative electrode. However, the reverse may also be possible.

The first electrode plate may be formed by applying a first electrode active material, such as graphite or carbon, to a first electrode collector plate formed of a metal foil of, for example, copper (Cu), a Cu alloy, nickel (Ni), or a Ni alloy. The first electrode plate may include a first electrode tab (e.g., a first uncoated portion), which is a region to which the first electrode active material is not applied. The first electrode tab may be a path for a current flow between the first electrode plate and the first subplate 320. In some embodiments, the first electrode tab may be formed by cutting (e.g., previously cutting) the first electrode plate so that the first electrode tab protrudes from a first side when the first electrode plate is fabricated, and may protrude further from the first side than the separator without additional cutting.

The second electrode plate may be formed by applying a second electrode active material, such as a transition metal oxide, to a second electrode collector plate formed of a metal foil of, for example, Al or an Al alloy. The second electrode plate may include a second electrode tab (e.g., a second uncoated portion), which is a region to which the second electrode active material is not applied. The second electrode tab may be a path for a current flow between the second electrode plate and the second subplate 420. In some embodiments, the second electrode tab may be formed by cutting (e.g., previously cutting) the second electrode plate so that the second electrode tab protrudes from a second side when the second electrode plate is fabricated, and may protrude further from the second side than the separator without additional cutting.

In some examples, the first electrode tab may be positioned on the right end side of the electrode assembly 100, and the second electrode tab may be positioned on the left end side of the electrode assembly 100. The terms "left" and "right" are used herein for convenience of illustration with reference to the rechargeable battery illustrated in FIG. 2, and the positions may be variously modified as the rechargeable battery is rotated left and right and/or up and down.

In some embodiments, an electrolyte inlet 130 may be provided in a first cap plate 360. An electrolyte may be injected into the case 200 through the electrolyte inlet 130. In FIG. 1, the electrolyte inlet 130 is illustrated as being provided on the first cap plate 360, but the present disclosure is not limited thereto. After the electrolyte injection is complete, the electrolyte inlet 130 may be sealed using a sealing means such as a stopper.

In some embodiments, a vent 110 may be provided in a first side of the case 200. For example, the vent 110 may be provided in a bottom surface of the case 200. Herein, the bottom surface may refer to a surface facing downward in a case where the rechargeable battery is finally installed. The vent 110 may prevent or substantially prevent the rechargeable battery from exploding, or may prevent or substantially prevent a chain reaction of rechargeable batteries arranged in close proximity to one another.

As an example, the vent 110 may be configured to open in the event that the internal pressure of the rechargeable battery exceeds a critical pressure (e.g., a predetermined critical pressure). In this case, the critical pressure may be set differently depending on the application, material, purpose, and the like of the rechargeable battery. As another example, the vent 110 may be configured to open in the event that the internal temperature exceeds a critical temperature (e.g., a predetermined critical temperature).

In FIG. 1, the vent 110 is illustrated as being a single vent provided at the center of one surface of the case 200, but the present disclosure is not limited thereto. In other embodiments, any suitable number of vents 110 may be provided at any suitable positions in one surface of the case 200. For example, two or more vents 110 may be provided at (e.g., in or on) one surface of the case 200.

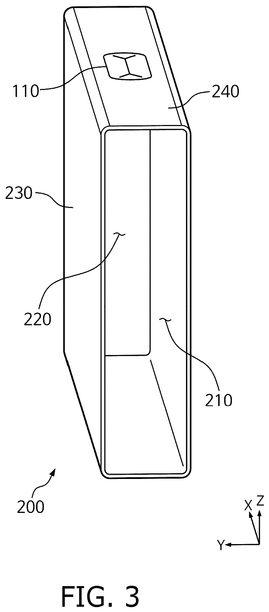

FIG. 3 illustrates a perspective view illustrating a case according to some embodiments of the present disclosure.

Referring to FIGS. 2 and 3, the case 200 may include long sidewalls 230 opposite to each other, short sidewalls 240 opposite to each other, an open first side 210, and an open second side 220.

A first direction X may refer to the X-axis direction. A second direction Y may be orthogonal to the first direction X. The second direction Y may refer to the Y-axis direction. A third direction Z may be orthogonal to the first direction X and the second direction Y. The third direction Z may refer to the Z-axis direction.

The long sidewalls 230 may include a first long sidewall portion and a second long sidewall portion. The first long sidewall portion and the second long sidewall portion may be opposite to each other. The first long sidewall portion and the second long sidewall portion may be opposite to each other, while being spaced apart from each other in the second direction Y.

The short sidewalls 240 may include a first short sidewall portion and a second short sidewall portion. The first short sidewall portion and the second short sidewall portion may be opposite to each other. The first short sidewall portion and the second short sidewall portion may be opposite to each other, while being spaced apart from each other in the third direction Z. The area of each of the first short sidewall portion and the second short sidewall portion may be smaller than the area of each of the first long sidewall portion and the second long sidewall portion.

The open first side 210 and the open second side 220 may be formed on opposite sides of the case 200, respectively. The open second side 220 may be opposite to the open first side 210. The open second side 220 and the open first side 210 may be opposite to each other while being spaced apart from each other in the first direction X. Each of the open first side 210 and the open second side 220 may refer to an open area.

The case 200 may be formed of a conductive metal, such as Al, an Al alloy, or Ni-plated steel.

The first cap plate 360 may cover the open first side 210, and be coupled to the case 200. The second cap plate 460 may cover the open second side 220, and be coupled to the case 200. For example, each of the first cap plate 360 and the second cap plate 460 may be welded to the case 200. The first cap plate 360 and the second cap plate 460 may seal the case 200.

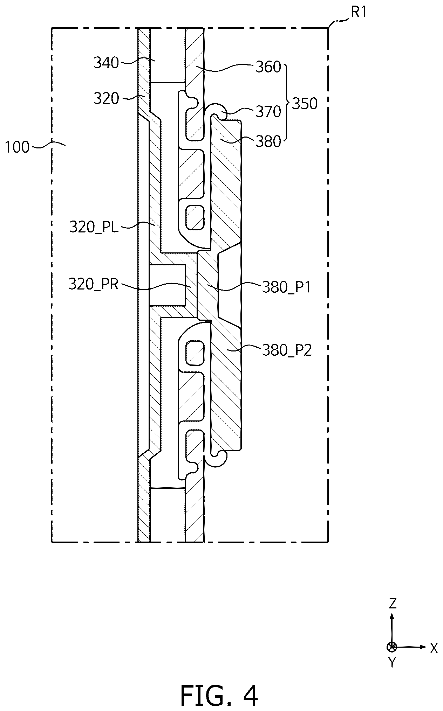

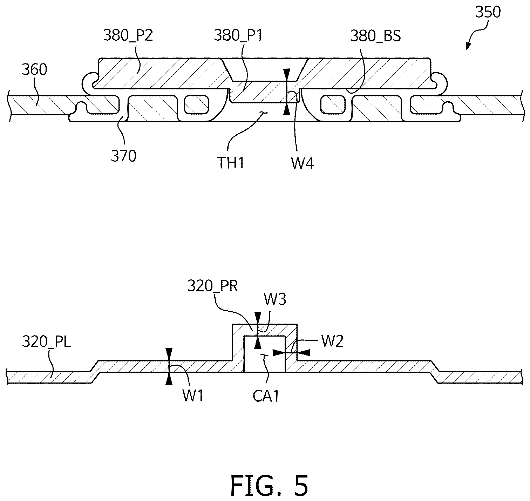

FIG. 4 illustrates an enlarged view of the region R1 in FIG. 2. FIG. 5 illustrates the first cap assembly and the first subplate assembly according to some embodiments of the present disclosure. For convenience, FIG. 5 illustrates a view in which the first cap assembly and the first subplate shown in FIG. 4 are separated from each other.

Referring to FIG. 4, the first subplate 320 and the first cap assembly 350 may be coupled to a first side of the electrode assembly 100.

The first subplate 320 may be coupled to the first side of the electrode assembly 100, and may be electrically connected to the first electrode plate (e.g., the positive electrode plate) of the electrode assembly 100. For example, the first electrode tab may be welded to the first subplate 320. The first subplate 320 may be connected to the first electrode tab.

A first insulation member 340 may be disposed between the first subplate 320 and the first cap assembly 350. The first insulation member 340 may prevent the first subplate 320 and the first cap plate 360 from contacting each other.

Referring to FIGS. 4 and 5, the first subplate 320 includes a first planar portion 320_PL and a first protruding portion 320_PR.

The first planar portion 320_PL may be coupled to the first electrode tab by welding. The first protruding portion 320_PR may be a protrusion on the first planar portion 320_PL. For example, the first protruding portion 320_PR may protrude from (e.g. with respect to or relative to) an upper surface of the first planar portion 320_PL. The first protruding portion 320_PR may have a cylindrical shape. A cavity CA1 may be provided inside the first protruding portion 320_PR.

The first planar portion 320_PL may have a first thickness W1. A side surface of the first protruding portion 320_PR may have a second thickness W2, and the top surface of the first protruding portion 320_PR may have a third thickness W3.

In some embodiments, first subplate 320 may be implemented as a forged product. Thus, each of the first thickness W1, the second thickness W2, and the third thickness W3 may be the same or substantially the same as each other (e.g., the thickness of the first subplate 320 may be constant or substantially constant). This may reduce the difficulty of a manufacturing process and defects in a rechargeable battery while reducing manufacturing costs, thereby improving the reliability of the rechargeable battery while reducing manufacturing costs. However, the present disclosure is not limited thereto.

In some embodiments, the first thickness W1 and the third thickness W3 may be the same or substantially the same as each other. The second thickness W2 may be less than each of the first thickness W1 and the third thickness W3.

The first cap assembly 350 may include a first cap plate 360, a first sealing member 370, and a first terminal plate 380.

The first sealing member 370 may be coupled to the first cap plate 360. The first sealing member 370 may include a first through-hole TH1. The first sealing member 370 may seal between the first terminal plate 380 and the first cap plate 360. The first sealing member 370 may include an insulating material. The first sealing member 370 may insulate the first cap plate 360 and the first terminal plate 380 from each other.

The first terminal plate 380 may be coupled onto the first sealing member 370. The first terminal plate 380 may be the positive electrode terminal of a rechargeable battery. For example, a busbar may be welded to the first terminal plate 380 to be electrically connected to another rechargeable battery.

The first terminal plate 380 includes a first portion 380_P1 and a second portion 380_P2. The first portion 380_P1 and the second portion 380_P2 may be integrated with each other, e.g., integrally formed with each other. The first portion 380_P1 may include a recessed bottom surface. The first portion 380_P1 is in contact with (e.g. connected with) the first protruding portion 320_PR. Thus, a direct connection for a current path is provided without requiring a current collector thereby reducing manufacturing costs and since less connections are required the reliability is increased. For example, the top surface of the first protruding portion 320_PR and the bottom surface of the first portion 380_P1 may be in contact with each other. The first portion 380_P1 may protrude from the bottom surface 380_BS of the first terminal plate 380 toward the first protruding portion 320_PR. Therefore, a reliable contact can be provided between first terminal plate 380 and the subplate 320 since the height distance to contact the first terminal plate 380 and the subplate 320 is shared and eases the manufacturing of first terminal plate 380 and/or the subplate 320 reducing a maximum protruding height.

The first portion 380_P1 may have a fourth thickness W4. In this case, the fourth thickness W4 may be a distance (e.g., a minimum distance) from the top surface to the bottom surface of the first portion 380_P1. The fourth thickness W4 may be greater than the first thickness W1 of the first subplate 320. Thus, the terminal plate 380 may replace the role of a current collector in storing energy by implementing a higher thickness W4 in the area that comes in contact with the subplate 320.

The second portion 380_P2 may be disposed around (e.g., adjacent to) the first portion 380_P1. The second portion 380_P2 may include a planar portion continuous with the first portion 380_P1. The planar portion of the second portion 380_P2 may be disposed on the first sealing member 370. The bottom surface of the second portion 380_P2 may be the bottom surface 380_BS of the first terminal plate 380. With respect to the bottom surface 380_BS of the first terminal plate 380, the top surface of the first portion 380_P1 may be disposed lower than the top surface of the second portion 380_P2. The top surface of the first terminal plate 380 may include a recessed portion. The recessed portion may be defined as the top surface of the first portion 380_P1 and a side surface of the second portion 380_P2.

A portion of the first portion 380_P1 may be disposed in the first through-hole TH1. A portion of the first protruding portion 320_PR may be disposed in the first through-hole TH1. The first portion 380_P1 and the first protruding portion 320_PR may be in contact with each other in the first through-hole TH1. For example, the bottom surface of the first portion 380_P1 and the top surface of the first protruding portion 320_PR may be disposed in the first through-hole TH1. Thus, a compact integration is achieved where the contact area is surrounded by the sealing member 370.

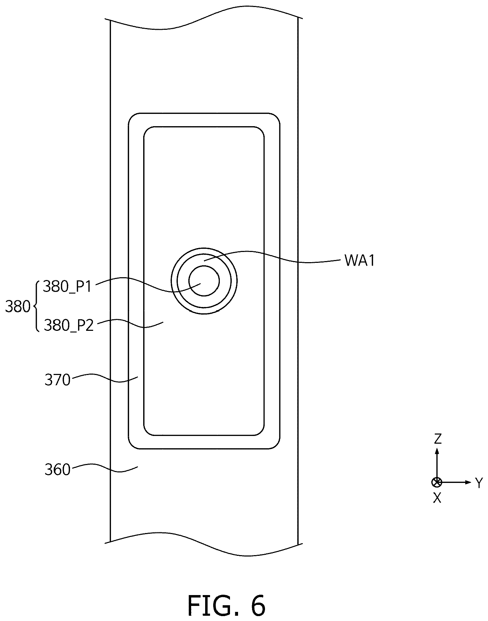

FIG. 6 illustrates a first welding area formed on the first terminal plate according to some embodiments of the present disclosure. For convenience, FIG. 6 may illustrate a plan view of the region R1 in FIG. 4 in the first direction X.

Referring to FIGS. 4 and 6, the first terminal plate 380 may further include a first welding area WA1 formed on the top surface of first portion 380_P1. A welding process may be performed on the first welding area WA1 to join the first terminal plate 380 and the first subplate 320 to each other. In more detail, the welding process may join the first portion 380_P1 and the first protruding portion 320_PR to each other by welding. As a result, the first subplate 320 and the first terminal plate 380 may be electrically connected to each other. A welding bead or the like may be formed on the first welding area WA1 due to the welding process. The first welding area WA1 is illustrated as having a donut shape, but the present disclosure is not limited thereto. The first welding area WA1 may have any suitable shape in which the first terminal plate 380 and the first subplate 320 are welded together.

A rechargeable battery may be manufactured by combining an electrode assembly with a collector, and the collector with a terminal plate. In such a rechargeable battery manufacturing process, a complex structure of the integrated circuit may increase the difficulty of the manufacturing process and may increase manufacturing costs. An increase in the difficulty of the manufacturing process may increase defects in the rechargeable battery, and may decrease the reliability of the rechargeable battery.

According to some embodiments of the present disclosure, the first subplate 320 may be coupled to the first side of the electrode assembly 100, and the first subplate 320 and the first terminal plate 380 may be coupled to each other. The first subplate 320 may be implemented as a forged product to reduce manufacturing costs. In addition, the first subplate 320 and the first terminal plate 380 may be connected to each other by a single welding process, thereby reducing the difficulty of the manufacturing process. Accordingly, defects in the rechargeable battery may be reduced, and the reliability of the rechargeable battery may be improved.

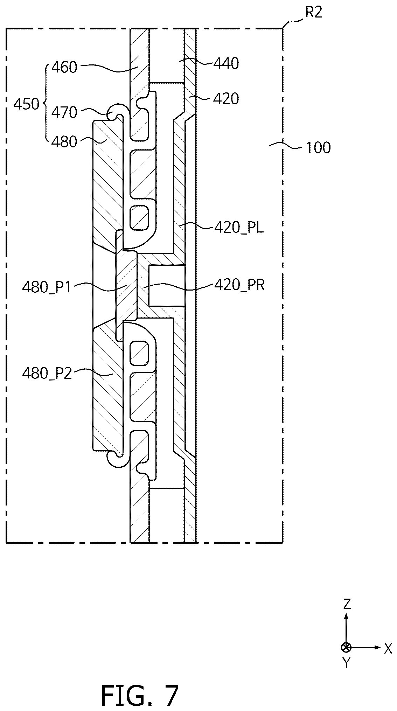

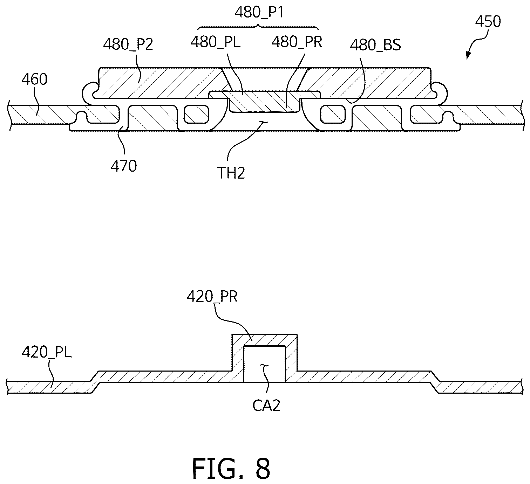

FIG. 7 illustrates an enlarged view of the region R2 in FIG. 2. FIG. 8 illustrates a view showing the second cap assembly and the second subplate assembly according to some embodiments of the present disclosure. For convenience, FIG. 8 illustrates a view in which the second cap assembly and the second subplate in FIG. 7 are separated from each other.

Referring to FIG. 7, the second subplate 420 and the second cap assembly 450 may be disposed on the first side of the electrode assembly 100.

The second subplate 420 may be coupled to the first side of the electrode assembly 100 and electrically connected to a second electrode plate (e.g., a negative electrode plate) of the electrode assembly 100. For example, the second electrode tab may be coupled to the second subplate 420 by welding. The second subplate 420 may be connected to the second electrode tab.

A second insulating member 440 may be disposed between the second subplate 420 and the second cap assembly 450. The second insulating member 440 may prevent the second subplate 420 and the second cap plate 460 from being in contact with each other.

Referring to FIGS. 7 and 8, the second subplate 420 may include a second planar portion 420_PL and a second protruding portion 420_PR.

The second planar portion 420_PL may be coupled to the second electrode tab by welding. The second protruding portion 420_PR may be a protrusion on the second planar portion 430_PL. The second protruding portion 420_PR may have a cylindrical shape. A cavity CA2 may be provided inside the second protruding portion 420_PR.

The thickness of each of the second planar portion 420_PL and the second protruding portion 420_PR may be the same or substantially the same as that described above for the thickness of each of the first planar portion 320_PL and the first protruding portion 320_PR with reference to FIG. 5. For example, in some embodiments, the second subplate 420 may be implemented as a forged product. Thus, the thickness of the second subplate 420 may be constant or substantially constant. This may reduce the difficulty of a manufacturing process and defects in a rechargeable battery, thereby improving the reliability of the rechargeable battery while reducing manufacturing costs.

The second cap assembly 450 may include the second cap plate 460, a second sealing member 470, and a second terminal plate 480.

The second sealing member 470 may be coupled to the second cap plate 460. The second sealing member 470 may include a second through-hole TH2. The second sealing member 470 may seal between the second terminal plate 480 and the second cap plate 460. The second sealing member 470 may include an insulating material. The second sealing member 470 may insulate the second cap plate 460 and the second terminal plate 480 from each other.

The second terminal plate 480 may be coupled onto the second sealing member 470. The second terminal plate 480 may be the negative electrode terminal of the rechargeable battery. For example, a busbar may be welded to the second terminal plate 480 to be electrically connected to another rechargeable battery.

The second terminal plate 480 includes a third portion 480_P1 and a fourth portion 480_P2. The third portion 480_P1 may be in contact (e.g. connected) with the second protruding portion 420_PR. For example, the top surface of the second protruding portion 420_PR and the bottom surface of the third portion 480_P1 may be in contact with each other. The third portion 480_P1 may protrude from a bottom surface 480_BS of the second terminal plate 480 toward the second protruding portion 420_PR. Therefore, a more reliable contact having a stable structure can be provided since the height distance between the second terminal plate 480 and subplate 420 is shared and eases the manufacturing of second terminal plate 480 and/or the subplate 420 reducing a maximum protruding height. The thickness of the third portion 480_P1 may be greater than the thickness of the second subplate 420. Thus, the second terminal plate 480 may replace the role of a current collector in storing energy by implementing a higher thickness in the area that comes in contact with the second subplate 420.

The third portion 480_P1 may include a third planar portion 480_PL and a third protruding portion 480_PR. The third protruding portion 480_PR may protrude toward the second protruding portion 420_PR on the third planar portion 480_PL. The third planar portion 480_PL may be in contact with the fourth portion 480_P2.

The fourth portion 480_P2 may be disposed around (e.g., adjacent to) the third portion 480_P1. The fourth portion 480_P2 may include a planar portion in contact with the third portion 480_P1. The planar portion of the fourth portion 480_P2 may be disposed on the second sealing member 470. The fourth portion 480_P2 may expose a portion of the third portion 480_P1. For example, a portion of the third portion 480_P1 may be exposed through a hollow in the central portion of the fourth portion 480_P2. The bottom surface of the fourth portion 480_P2 may be the bottom surface 480_BS of the second terminal plate 480. With respect to the bottom surface 480_BS of the second terminal plate 480, the top surface of the third portion 480_P1 may be disposed lower than the top surface of the fourth portion 480_P2. The top surface of the second terminal plate 480 may include a recessed portion. The recessed portion may be defined as the top surface of the third portion 480_P1 and a side of the fourth portion 480_P2.

In some embodiments, the third portion 480_P1 and the fourth portion 480_P2 may be formed of different materials from each other. The third portion 480_P1 may include, for example, Cu. The fourth portion 480_P2 may include, for example, Al. In more detail, the third portion 480_P1 may be a conductive material having a major constituent of Cu. Thus, the third portion 480_P1 of the second terminal 480 may replace the role of a current collector in storing more energy by the selected material. The fourth portion 480_P2 may be a conductive material having a major constituent of Al. As used herein, the phrase "major constituent" refers to a substance having the predominant content from among the substances of an alloy, from the standpoint of a person having ordinary skill in the art.

Although the third portion 480_P1 has been described as including Cu and the fourth portion 480_P2 has been described as including Al, the present disclosure is not limited thereto. In some embodiments, the third portion 480_P1 and the fourth portion 480_P2 may include different conductive metals from each other.

The third planar portion 480_PL may be disposed in the second through-hole TH2. A portion of the second protruding portion 420_PR may be disposed in the second through-hole TH2. The third portion 480_P1 and the second protruding portion 420_PR may be in contact with each other in the second through-hole TH2. For example, the bottom surface of the third portion 480_P1 and the top surface of the second protruding portion 420_PR may be disposed in the second through-hole TH2.

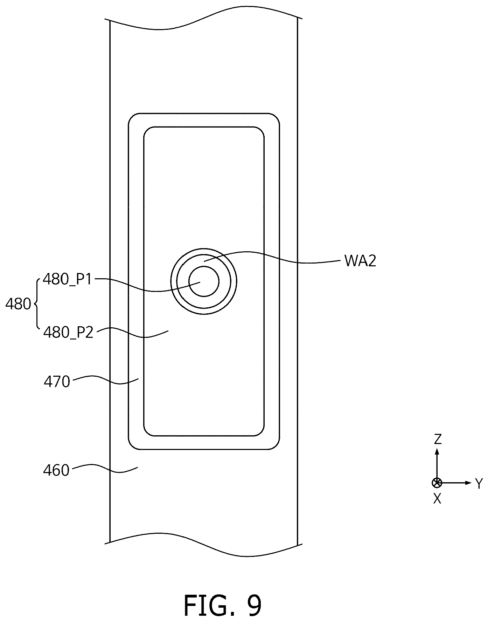

FIG. 9 illustrates a second welding area formed on the second terminal plate according to some embodiments of the present disclosure. For convenience, FIG. 9 may be a plan view of the region R2 in FIG. 4 in the first direction X.

Referring to FIGS. 7 and 9, the second terminal plate 480 may further include a second welding area WA2 formed on the top surface of the third portion 480_P1. A welding process may be performed on the second welding area WA2 to join the second terminal plate 480 and the second subplate 420 to each other. In more detail, the third portion 480_P1 and the second protruding portion 420_PR may be welded together by the welding process. As a result, the second subplate 420 and the second terminal plate 480 may be electrically connected to each other. A welding bead or the like may be formed on the second welding area WA2 due to the welding process. The second welding area WA2 is illustrated as having a donut shape, but the present disclosure is not limited thereto. The second welding area WA2 may have any suitable shape in which the second terminal plate 480 and the second subplate 420 are welded together.

According to some embodiments of the present disclosure, the second subplate 420 may be coupled to the first side of the electrode assembly 100, and the second subplate 420 and the second terminal plate 480 may be coupled to each other. The second subplate 420 may be implemented as a forged product, thereby reducing manufacturing costs. Furthermore, the second subplate 420 and the second terminal plate 480 may be connected to each other by a single welding process, thereby reducing the difficulty of the manufacturing process. Accordingly, defects in the rechargeable battery may be reduced, and the reliability of the rechargeable battery may be improved.

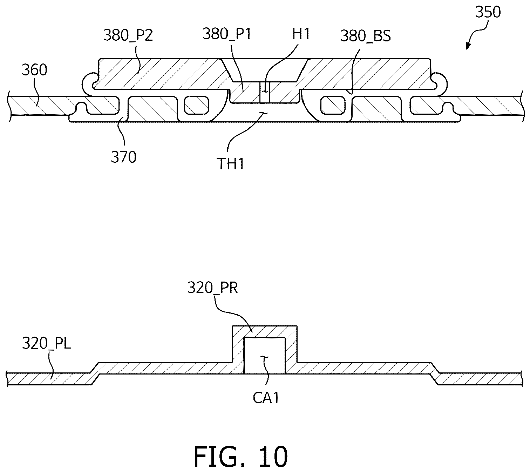

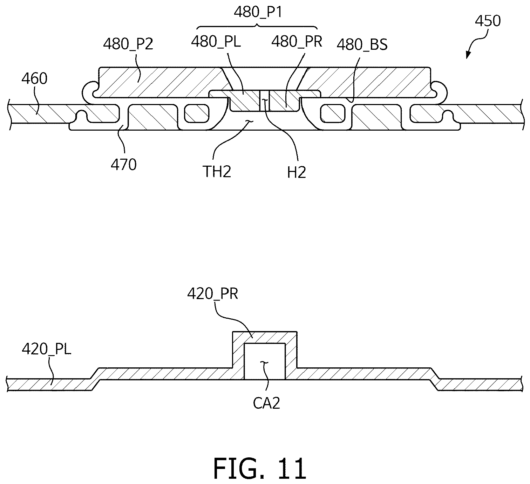

FIGS. 10 and 11 illustrate the rechargeable battery according to some embodiments of the present disclosure. FIG. 10 is an enlarged view illustrating the first cap assembly and the first subplate according to some embodiments of the present disclosure. FIG. 11 illustrates an enlarged view showing the second cap assembly and the second subplate according to some embodiments of the present disclosure. For convenience, features different from those described above with reference to FIGS. 5 and 8 may be described in more detail hereinafter.

Referring to FIG. 10, the first terminal plate 380 may include a first hole H1. The first hole H1 may expose a portion of the first subplate 320. In more detail, the first hole H1 may be formed in the first portion 380_P1. The first hole H1 may extend through (e.g., may penetrate) the first portion 380_P1. In a case where the first subplate 320 and the first cap assembly 350 are coupled, the first hole H1 may expose a portion of the top surface of the first protruding portion 320_PR.

The first subplate 320 and the first terminal plate 380 may be welded to each other. For example, a welding area may be formed on the top surface of the first portion 380_P1. The welding area may be formed around the first hole H1. A welding process may be performed on the welding area to join the first terminal plate 380 and the first subplate 320 to each other. Accordingly, the first subplate 320 and the first terminal plate 380 may be electrically connected to each other. A welding bead or the like may be formed on the welding area due to the welding process.

Referring to FIG. 11, the second terminal plate 480 may include a second hole H2. The second hole H2 may expose a portion of the second subplate 420. In more detail, the second hole H2 may be formed in the third portion 480_P1. The second hole H2 may extend through (e.g., may penetrate) the third portion 480_P1. The second hole H2 may extend through each of the third planar portion 480_PL and the third protruding portion 480_PR. In a case where the second subplate 420 and the second cap assembly 450 are combined with each other, the second hole H2 may expose a portion of the top surface of the second protruding portion 420_PR.

The second subplate 420 and the second terminal plate 480 may be welded to each other. For example, a welding area may be formed on the top surface of the third portion 480_P1. The welding area may be formed around the second hole H2. A welding process may be performed in the welding area to join the second terminal plate 480 and the second subplate 420 to each other. Accordingly, the second subplate 420 and the second terminal plate 480 may be electrically connected to each other. A welding bead or the like may be formed on the welding area by the welding process.

In a rechargeable battery manufacturing process, in a case where the cap plate and the subplate are not tightly fitted, a defect in the welding process may occur. According to some embodiments of the present disclosure, the first terminal plate 380 may include the first hole H1, and the second terminal plate 480 may include the second hole H2. Whether or not the first and second subplates 320 and 420 are tightly fitted and whether or not the first and second terminal plates 380 and 480 are tightly fitted may be determined by the first and second holes H1 and H2, respectively. Accordingly, defects may be reduced in the process of manufacturing a rechargeable battery.

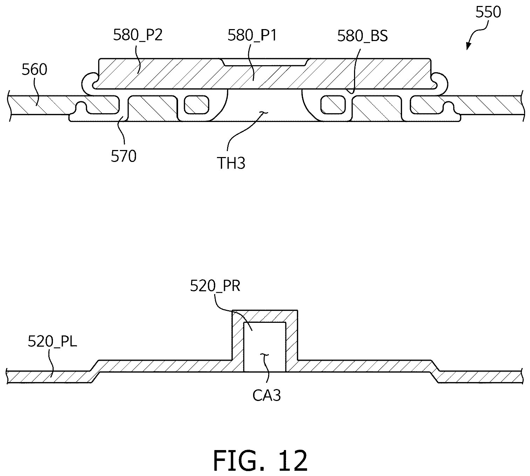

FIG. 12 illustrate the rechargeable battery according to some embodiments of the present disclosure. For convenience, features different from those described above with reference to FIG. 5 may be described in more detail hereinafter.

Referring to FIG. 12, the first subplate 520 includes a first planar portion 520_PL and a first protruding portion 520_PR. The first subplate 520 may be the same or substantially the same as the first subplate 320 described above with reference to FIG. 5, except for the height of the first protruding portion 520_PR may be different. The height of the first protruding portion 520_PR may be a height at which the first terminal plate 580 contacts a first portion 580_P1. A cavity CA3 may be formed in the first protruding portion 520_PR.

A first cap assembly 550 may include a first cap plate 560, a first sealing member 570, and a first terminal plate 580. The first cap plate 560 and the first sealing member 570 may be the same or substantially the same as the first cap plate 360 and the first sealing member 370 described above with reference to FIG. 5. Thus, the first terminal plate 580 will be described in more detail hereinafter.

The first terminal plate 580 may be coupled onto the first sealing member 570. The first terminal plate 580 may be the positive electrode terminal of the rechargeable battery. For example, a busbar may be welded to the first terminal plate 580 to be electrically connected to another rechargeable battery.

The first terminal plate 580 includes a first portion 580_P1 and a second portion 580_P2. The first portion 580_P1 is in contact with the first protruding portion 520_PR. For example, the top surface of the first protruding portion 520_PR and the bottom surface of the first portion 580_P1 may be in contact with each other. The bottom surface 580_BS of the first terminal plate 580 may be flat or substantially flat. For example, the bottom surface of the first portion 580_P1 and the bottom surface of the second portion 580_P2 may be disposed at (e.g., in or on) the same plane as each other. The bottom surface 580_BS of the first terminal plate 580 may be defined as the bottom surface of the first portion 580_P1 and the bottom surface of the second portion 580_P2.

In some embodiments, with respect to the bottom surface 580_BS of the first terminal plate 580, the top surface of the first portion 580_P1 may be disposed lower than the top surface of the second portion 580_P2. The top surface of the first terminal plate 580 may include a recessed portion. The recessed portion may be defined as the top surface of first portion 580_P1 and a side surface of second portion 580_P2.

In some embodiments, with respect to the bottom surface 580_BS of the first terminal plate 580, the top surface of the first portion 580_P1 and the top surface of the second portion 580_P2 may be disposed at the same or substantially the same height as each other. In other words, the top surface of the first terminal plate 580 may be flat or substantially flat.

The first portion 580_P1 may be disposed at (e.g., in or on) a first through-hole TH3. The first portion 580_P1 may not be disposed in the first through-hole TH3. In a case where the first cap assembly 550 and the first subplate 520 are coupled, the first protruding portion 520_PR may be disposed in the first through-hole TH3 and may be in contact with the first portion 580_P1.

In FIG. 12, only the first cap assembly 550 and the first subplate 520 are illustrated for convenience, but the same or substantially the same may be applied to the second cap assembly and the second subplate.

According to embodiments of the present disclosure described above, the current collector may be removed from a comparative structure including three components (e.g., the terminal plate, the current collector, and the subplate), thereby reducing material costs.

## Claims

1. A rechargeable battery comprising:
an electrode assembly (100);
a case (200) configured to accommodate the electrode assembly (100);
a subplate (320, 420) comprising:
a first planar portion (320_PL, 420_PL) connected to the electrode assembly (100); and
a protruding portion (320_PR, 420_PR) protruding from an upper surface of the first planar portion (320_PL, 420_PL);
a cap plate (360, 460) coupled to an open first side (210) of the case (200); and
a terminal plate (380, 480) disposed on the cap plate (360, 460), and electrically connected to the subplate (320, 420), the terminal plate (380, 480) comprising:
a first portion (380_P1, 480_P1) comprising a bottom surface; and
a second portion (380_P2, 480_P2) comprising a second planar portion connected to the first portion (380_P1, 480_P1),
wherein the first portion (380_P1, 480_P1) of the terminal plate (380, 480) is in contact with the protruding portion (320_PR, 420_PR) of the subplate (320, 420).

2. The rechargeable battery as claimed in claim 1, wherein a thickness (W4) of the first portion (380_1, 480_1) is greater than a thickness (W3) of the protruding portion (320_PR, 420_PR).

3. The rechargeable battery as claimed in one of the preceding claims 1 to 2, wherein the first planar portion (320_PL, 420_PL) and the protruding portion (320_PR, 420_PR) of the subplate (320, 420) have a same thickness (W1, W3).

4. The rechargeable battery as claimed in one of the preceding claims 1 to 3, wherein the first portion (380_P1, 480_P2) that is in contact with the protruding portion (320_PR, 420_PR) protrudes from a bottom surface of the second portion (380_P2, 480_P2) toward the protruding portion (320_PR, 420_PR).

5. The rechargeable battery as claimed in one of the preceding claims 1 to 4, further comprising a sealing member (370, 470) coupled onto the cap plate (360, 460),
wherein the sealing member (370, 470) is located between the second portion (380_P2, 480_P2) of the terminal plate (380, 480) and the subplate (320, 420).

6. The rechargeable battery as claimed in claim 5, wherein the sealing member (370) has a through-hole (TH1, TH2), and the first portion (380_P1, 480_P1) of the terminal plate (380, 480) is located at least partially in the through-hole (TH1, TH2).

7. The rechargeable battery as claimed in claim 6, wherein the first portion (380_P1, 480_P2) of the terminal plate (380, 480) and the protruding portion (320_PR, 420_PR) of the subplate (320, 420) are in contact with each other in the through-hole (TH1, TH2) of the sealing member (370, 470).

8. The rechargeable battery as claimed in one of the preceding claims 1 to 7, wherein the protruding portion (320_PR, 420_PR) of the subplate (320, 420) has a cylindrical shape, and an interior of the protruding portion (320_PR, 420_PR) is hollow.

9. The rechargeable battery as claimed in one of the preceding claims 1 to 8, wherein an upper surface of the first portion (380_P1, 480_P2) of the terminal plate (380, 480) is lower than an upper surface of the second portion (380_P2, 480_P2) of the terminal plate (380, 480).

10. The rechargeable battery as claimed in one of the preceding claims 1 to 9, wherein the first portion (380_P1) of the terminal plate (380) has a hole (H1, H2) exposing a portion of the protruding portion (320_PR; 420_PR).

11. The rechargeable battery as claimed in one of the preceding claims 1 to 10, wherein the subplate (320, 420) is a forged product.

12. The rechargeable battery as claimed in one of the preceding claims 1 to 11, wherein the terminal plate (380, 480) further comprises a welding area (WA) on an upper surface of the first portion (380_P1, 480_P1).

13. The rechargeable battery as claimed in one of the preceding claims 1 to 12, wherein the case (200) comprises:
a first long sidewall portion and a second long sidewall portion (230) opposite to and spaced from each other; and
a first short sidewall portion and a second short sidewall portion (240) opposite to and spaced from each other, and
wherein areas of the first short sidewall portion and the second short sidewall portion (240) are smaller than areas of the first long sidewall portion and the second long sidewall portion (230), respectively.

14. The rechargeable battery as claimed in one of the preceding claims 1 to 13, wherein the first portion (380_P1) and the second portion (380_P2) are integrally formed with each other, or
the first portion (480_P1) and the second portion (480_P2) are two-pieced and in contact with each other.:

15. The rechargeable battery as claimed in claim 14, wherein the first portion (480_P1) and the second portion (480_P2) comprise different materials.
